(19) **Europäisches Patentamt European Patent Office Office européen des brevets**

(11) **EP 2 316 208 B1**

(12) **FASCICULE DE BREVET EUROPEEN**

(45) Date de publication et mention de la délivrance du brevet:
**21.03.2012 Bulletin 2012/12**

(51) Int Cl.:
**H04L 25/02** *(2006.01)*    **H04L 25/03** *(2006.01)*
**H04L 1/00** *(2006.01)*

(21) Numéro de dépôt: **09769544.9**

(22) Date de dépôt: **26.06.2009**

(86) Numéro de dépôt international:
**PCT/FR2009/051237**

(87) Numéro de publication internationale:
**WO 2009/156703 (30.12.2009 Gazette 2009/53)**

(54) **PROCEDE DE CONTRÔLE DYNAMIQUE DE LA FOCALISATION D'UN SIGNAL PRE-EGALISE PAR RETOURNEMENT TEMPOREL**

VERFAHREN ZUM DYNAMISCHEN STEUERN DER FOKUSSIERUNG EINES VORENTZERRTEN ZEITUMKEHRSIGNALS

METHOD FOR DYNAMICALLY CONTROLLING FOCUSING OF A TIME-REVERSAL PRE-EQUALIZED SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0854358**

(43) Date de publication de la demande:
**04.05.2011 Bulletin 2011/18**

(73) Titulaire: **FRANCE TELECOM**
**75015 Paris (FR)**

(72) Inventeurs:
• **PHAN HUY, Dinh, Thuy**
  **F-75004 Paris (FR)**
• **WIART, Joe**
  **F-77400 Lagny Sur Marne (FR)**
• **ZIADE, Youmni**
  **F-92340 Bourg La Reine (FR)**
• **DESBAT, Jean-Philippe**
  **F-75015 Paris (FR)**

(56) Documents cités:
**US-A1- 2003 138 053**

• **PATRICE PAJUSCO ET AL: "Characterization of UWB time reversal using circular array measurements" WIRELESS TECHNOLOGIES, 2007 EUROPEAN CONFERENCE ON, IEEE, PI, 1 octobre 2007 (2007-10-01), pages 102-105, XP031190917**
• **SHARMA J J ET AL: "Compensating the effects of target acceleration in dual-channel SAR-GMTI" IEE PROCEEDINGS: RADAR, SONAR & NAVIGATION, INSTITUTION OF ELECTRICAL ENGINEERS, GB, vol. 153, no. 1, 16 février 2006 (2006-02-16), pages 53-62, XP006025889 ISSN: 1350-2395**
• **GOMES J ET AL: "Time-reversed OFDM communication in underwater channels" SIGNAL PROCESSING ADVANCES IN WIRELESS COMMUNICATIONS, 2004 IEEE 5TH WORKSHOP ON LISBON, PORTUGAL 11-14 JULY 2004, PISCATAWAY, NJ, USA,IEEE, 11 juillet 2004 (2004-07-11), pages 626-630, XP010805978**
• **TOURIN A ET AL: "Time reversal telecommunications in complex environments" COMPTES RENDUS - PHYSIQUE, ELSEVIER, PARIS, FR, vol. 7, no. 7, 1 septembre 2006 (2006-09-01), pages 816-822, XP024978786 ISSN: 1631-0705 [extrait le 2006-09-01]**

**EP 2 316 208 B1**

**Description**

Le domaine de l'invention est celui des télécommunications et plus précisément des techniques de communication radio entre des entités communicantes.

Plus particulièrement, l'invention concerne la qualité de transmission d'un signal basé sur une technique de retournement temporel entre deux entités communicantes.

Un signal radio transmis par une antenne d'une entité communicante subit des déformations en fonction des conditions de propagation entre un point d'origine défini en sortie de l'antenne d'origine et un point destinataire défini en entrée d'une antenne de l'entité communicante destinataire. Afin de limiter ces déformations, le signal est préalablement distordu par application de coefficients de pré-égalisation en fonction des caractéristiques du canal de propagation entre ces deux antennes. Il est donc nécessaire de caractériser ce canal de propagation.

Parmi les méthodes de pré-égalisation existantes, se distinguent les méthodes basées sur le retournement temporel du fait de leur complexité réduite, de leur performance et de leur capacité intrinsèque à focaliser une onde radio sur une antenne de réception. Le retournement temporel permet de réduire significativement la dispersion temporelle du canal de propagation en focalisant l'énergie du signal reçu dans le temps et dans l'espace.

Le retournement temporel est une technique de focalisation des ondes, typiquement des ondes acoustiques, qui repose sur l'invariance par renversement du temps de l'équation d'onde. Ainsi, une onde temporellement inversée se propage comme une onde directe qui remonterait le temps. Une impulsion brève émise d'un point origine se propage dans un milieu de propagation. Une partie de cette onde reçue par un point destinataire est retournée temporellement avant d'être renvoyée dans le milieu de propagation. L'onde converge vers le point origine en y reformant une impulsion brève et l'énergie de l'onde est focalisée sur le point d'origine. Le signal, focalisé par retournement temporel sur le point d'origine, est quasi identique dans sa forme au signal d'origine émis au point origine. Il y a ainsi recompression temporelle au point d'origine. En particulier l'onde retournée converge d'autant plus précisément que le milieu de propagation est complexe.

La technique du retournement temporel est ainsi appliquée aux réseaux de communication radio pour annuler l'effet du canal de propagation sur le signal, notamment en réduisant l'étalement du canal, et simplifier le traitement de symboles reçus après la traversée du canal. Le signal émis par une antenne de l'entité communicante d'origine est ainsi pré-égalisé par application de coefficients obtenus à partir du retournement temporel de la réponse impulsionnelle du canal de propagation que ce signal doit traverser. Le retournement temporel du canal de propagation appliqué au signal permet d'annuler l'effet de ce canal lors de la transmission du signal ainsi pré-distordu à partir du point d'origine, et de focaliser le signal sur une antenne destinataire. La mise en oeuvre du retournement temporel nécessite ainsi la connaissance du canal de propagation par l'entité communicante d'origine.

Cependant, lorsque les entités communicantes sont mobiles, l'estimation du canal effectuée à un instant donné par une entité communicante peut s'avérer erronée à un instant suivant du fait de la mobilité des entités communicantes. Cette erreur est qualifiée par rapport à un mouvement relatif défini en fonction de la vitesse de déplacement de l'entité communicante d'origine observée depuis l'entité communicante destinataire. Pour des mouvements relatifs importants il y a décorrélation entre l'estimée du canal de propagation, appliquée pour la pré-distorsion du signal, et le canal de propagation effectivement subi par le signal.

Ainsi, d'une part la pré-distorsion du signal est inadéquate et d'autre part la focalisation du signal sur une antenne destinataire n'est pas réalisée. La technique de pré-égalisation par retournement temporel donne donc de mauvaises performances pour des entités communicantes se déplaçant rapidement.

La dé-focalisation du signal est en fait engendrée par le mouvement relatif mais également par un délai de latence. Le délai de latence est le délai global comprenant un délai de traitement entre la mesure du canal de propagation et l'émission du signal focalisé, et un délai de propagation entre l'émission et la réception du signal focalisé.

La position de l'antenne destinataire relative à l'estimation du canal de propagation appliqué au signal pré-égalisé définit un point focal. Le point focal correspond ainsi à la position de l'antenne destinataire relativement à l'antenne d'origine avant que ne s'écoule le délai de latence. En d'autres termes, le point focal correspond au point de convergence des ondes pour des entités communicantes statiques et en l'absence de délai de latence. Dans le cas d'un déplacement de l'une ou des deux entités communicantes pendant le délai de latence, l'antenne destinataire se trouve à une position qui est différente de la position du point focal relativement à l'antenne d'origine, donc le point focal n'est pas respecté.

Lorsque la focalisation du signal n'est pas réalisée, la qualité de service est dégradée. La qualité de service est par exemple le débit offert ou bien encore un taux d'erreur sur les données véhiculées par le signal. Ainsi, la qualité de service est dégradée dès que l'entité communicante destinataire et/ou l'entité communicante d'origine se déplacent. Cette dégradation augmente lorsqu'augmente le mouvement relatif de l'entité communicante d'origine par rapport à l'entité communicante destinataire, ce mouvement ayant eu lieu pendant la durée de latence. En d'autres termes, la puissance reçue sur l'antenne destinataire diminue lorsque le mouvement relatif augmente pendant la durée de latence. De plus, cette dégradation est fonction de la fréquence porteuse du signal pré-égalisé.

Il est donc nécessaire que l'entité communicante d'origine adapte des paramètres de transmission relatifs à la focalisation d'un signal, notamment en fonction du mouvement relatif des entités communicantes, afin de garantir une qualité de service qui peut être par exemple un débit offert ou bien encore un taux d'erreur sur les données véhiculées. Les paramètres de transmission sont par exemple le délai de latence ou la fréquence porteuse du signal émis. L'entité communicante peut également choisir de changer de bande de fréquence, et donc de fréquence porteuse, au sein d'un même système de communication radio, ou bien encore de basculer sur un système de communication radio distinct opérant dans une bande de fréquence distincte.

Il existe donc un besoin pour un procédé de contrôle dynamique de la focalisation d'un signal pré-égalisé par retournement temporel afin d'adapter les paramètres de transmission d'un signal pré-égalisé par retournement temporel.

L'invention est adaptée pour des entités communicantes avec au moins une antenne d'émission et au moins une antenne réception. Une entité communicante peut être un terminal mobile, un point d'accès radio, une station de base terrestre ou satellitaire, ou tout équipement équipé d'une carte communicante.

Cette solution est en outre adaptée pour des entités communicantes avec plusieurs antennes émission et/ou plusieurs antennes réception par exemple pour des systèmes de communication radio de type MIMO (pour "Multiple Input, Multiple Output"), SIMO ("pour "Single Input, Multiple Output") ou encore MISO (pour " Multiple Input,Single Output").

Pour atteindre cet objectif, l'invention propose un procédé de contrôle dynamique de la focalisation d'un signal pré-égalisé par retournement temporel d'un canal de propagation estimé entre une antenne d'origine d'une entité communicante d'origine et une antenne destinataire d'une entité communicante destinataire à un instant courant. Le procédé comporte les étapes de:

- évaluation par l'entité communicante destinataire d'une qualité relative de focalisation du signal pré-égalisé émis par l'antenne d'origine et reçu par l'antenne destinataire, par rapport à une qualité à un point focal, et si la qualité relative de focalisation évaluée ne satisfait pas un critère prédéterminé,
- demande, par l'entité communicante destinataire, de modification de focalisation à destination de l'entité communicante d'origine pour un instant suivant.

Ce procédé permet ainsi d'adapter dynamiquement des paramètres de transmission d'un signal pré-égalisé par retournement temporel en fonction d'une information de qualité de focalisation relative délivrée par l'entité communicante destinataire. La qualité de service s'exprime ainsi par une qualité relative de focalisation déterminée à partir du signal reçu par l'entité communicante destinataire. L'évaluation de la qualité relative de focalisation, qui exploite les propriétés spatio-temporelles de la technique de pré-égalisation par retournement temporel, permet une évaluation simple et rapide des modifications adéquates des paramètres de transmission. Ce procédé permet ainsi d'ajuster dynamiquement les paramètres de transmission, notamment en fonction du déplacement de l'une ou des deux entités communicantes.

Notamment, la qualité relative de focalisation est déterminée à partir d'une représentation normalisée d'une courbe de puissance reçue, en fonction d'une distance entre l'antenne destinataire et le point focal, la représentation étant une fonction décroissante de la distance et ayant un maximum au point focal.

La qualité de focalisation s'exprime ainsi relativement à une qualité maximum qui doit être atteinte au point focal et non pas en qualité absolue qui dépend de la fréquence porteuse. Le point focal correspond à la position de l'antenne destinataire relativement à l'antenne d'origine avant que ne s'écoule le délai de latence. La représentation normalisée d'une courbe de puissance reçue permet d'effectuer des comparaisons de performance pour différents paramètres de transmissions et ainsi de sélectionner une configuration plus favorable pour l'instant suivant afin d'obtenir une qualité de service cible.

L'étape de demande de modification comporte

- une estimation d'une distance entre l'antenne destinataire à l'instant courant et une position correspondant à une qualité relative de focalisation cible,
- une émission d'une requête de modification à destination de l'entité communicante d'origine comportant l'estimation de ladite distance.

Ainsi, l'entité communicante destinataire évalue simplement un écart de distance entre l'antenne destinataire et une position correspondant à une qualité relative de focalisation cible, sans mise en oeuvre de traitement complexe sur le signal qui induirait des temps de traitement supplémentaires. La simple donnée de l'écart permet alors à l'entité communicante d'origine d'ajuster les paramètres de transmission permettant de diminuer ou annuler cet écart.

L'étape de demande de modification peut également comporter

- une estimation d'un écart entre la valeur de la qualité relative de focalisation évaluée à l'instant courant et une valeur d'une qualité relative de focalisation cible,

- une émission d'une requête de modification à destination de l'entité communicante d'origine comportant l'estimation de l'écart.

Ainsi, la complexité de l'entité communicante destinataire est limitée au calcul de la qualité relative de focalisation et à l'écart par rapport à une qualité relative de focalisation cible. La simple donnée de l'écart permet alors à l'entité communicante d'origine d'ajuster les paramètres de transmission permettant de diminuer ou annuler cet écart.

L'étape de demande de modification peut également comporter :

- une estimation d'une distance entre l'antenne destinataire à l'instant courant et une position correspondant à une qualité relative de focalisation cible,
- une sélection d'une valeur pour au moins un paramètre, pour l'instant suivant, choisi parmi une fréquence porteuse et un délai de latence
- une émission d'une requête à destination de l'entité communicante d'origine, comportant une référence à la valeur de l'au moins un paramètre sélectionné.

Ainsi, l'entité communicante destinataire évalue simplement un écart entre l'antenne destinataire et une position correspondant à une qualité relative de focalisation cible. Elle peut alors sélectionner des paramètres de transmission lui permettant d'atteindre ou se rapprocher de la qualité relative de focalisation cible, et transmettre sa sélection à l'entité communicante d'origine. Cette dernière peut alors soit modifier les paramètres selon la demande reçue, soit changer la sélection avant modification des paramètres.

La sélection, effectuée par l'une ou l'autre des entités communicantes, permet par exemple d'allouer des fréquences porteuses plus élevées en fréquence pour des vitesses de déplacement rapide. La sélection peut également inclure des contraintes relatives par exemple à l'occupation des fréquences porteuses ce qui permet d'optimiser l'allocation des fréquences porteuses en fonction du mouvement relatif des entités communicantes. La sélection peut également respecter des contraintes de services temps réels nécessitant des délais de latence réduit. La sélection peut également considérer un changement de système de transmission radio.

L'étape de demande de modification peut également comporter:

- une comparaison entre l'estimation de la qualité relative de focalisation et une qualité relative de focalisation cible,
- une détermination d'un indice de variation en fonction du résultat de la comparaison,
- une émission d'une requête de modification à destination de l'entité communicante d'origine comportant l'indice de variation.

Ainsi, la complexité de l'entité communicante est limitée au calcul de la qualité relative de focalisation et une comparaison par rapport à une qualité relative de focalisation cible. Selon le résultat de la comparaison obtenue, l'entité communicante destinataire demande simplement un rapprochement ou un éloignement relativement au point focal. La simple donnée du résultat de la comparaison permet alors à l'entité communicante d'origine d'ajuster les paramètres de transmission afin de se rapprocher ou s'éloigner de pas en pas relativement, au point focal, au cours d'itérations successives.

Sur réception de la demande de modification l'entité communicante d'origine modifie une valeur pour au moins un paramètre, pour l'instant suivant, choisi parmi une fréquence porteuse et un délai de latence.

L'entité communicante d'origine modifie par exemple la fréquence porteuse et/ou le délai de latence pour l'itération suivante. Cette modification est réalisée suite à une sélection des paramètres de transmission effectuée par l'entité communicante d'origine ou bien encore suite à une sélection effectuée par l'entité communicante destinataire.

L'invention concerne également un dispositif, pour une entité communicante destinataire, de contrôle dynamique de la focalisation d'un signal pré-égalisé par retournement temporel d'un canal de propagation estimé entre une antenne d'origine d'une entité communicante d'origine et une antenne destinataire de l'entité communicante destinataire à un instant courant. Le dispositif comporte:

- des moyens d'évaluation d'une qualité relative de focalisation du signal pré-égalisé émis par l'antenne d'origine et reçu par l'antenne destinataire, par rapport à une qualité à un point focal,
- des moyens de demande de modification de focalisation à destination de l'entité communicante d'origine pour un instant suivant.

L'invention concerne également un dispositif, pour une entité communicante d'origine, de contrôle dynamique de la focalisation d'un signal pré-égalisé par retournement temporel d'un canal de propagation estimé entre une antenne d'origine d'une entité communicante d'origine et une antenne destinataire de l'entité communicante destinataire à un instant courant. Le dispositif comporte:

- des moyens de réception d'une demande de modification de focalisation émise par l'entité communicante destinataire,
- des moyens de modification d'une valeur pour au moins un paramètre choisi parmi une fréquence porteuse et un délai de latence.

L'invention concerne également une entité communicante d'un système de communication radio comportant au moins un des dispositifs pour le contrôle dynamique de la focalisation selon l'invention.

L'invention concerne également un système de communication radio comportant au moins une entité communicante selon l'invention.

Les dispositifs, l'entité communicante et le système présentent des avantages analogues à ceux précédemment décrits.

D'autres caractéristiques et avantages de la présente invention apparaîtront plus clairement à la lecture de la description suivante de plusieurs modes particuliers de réalisation de l'invention, et des entités communicantes associées, donnés à titre de simples exemples illustratifs et non limitatifs, et des dessins annexés, sur lesquels :

- la figure 1 est un bloc-diagramme schématique d'une entité communicante d'origine communicant avec une entité communicante destinataire selon l'invention,
- la figure 2 représente des exemples de courbes de puissance reçue en fonction d'une distance entre une antenne destinataire et un point focal,
- la figure 3 représente un exemple de représentations normalisées de courbes de puissance reçue en fonction d'une distance entre une antenne destinataire et un point focal,
- la figure 4 représente les étapes du procédé de contrôle dynamique de focalisation d'un signal pré-égalisé par retournement temporel selon un premier mode de réalisation,
- la figure 5 représente les étapes du procédé de contrôle dynamique de focalisation d'un signal pré-égalisé par retournement temporel selon un deuxième mode de réalisation,
- la figure 6 représente les étapes du procédé de contrôle dynamique de focalisation d'un signal pré-égalisé par retournement temporel selon un troisième mode de réalisation,
- la figure 7 représente les étapes du procédé de contrôle dynamique de focalisation d'un signal pré-égalisé par retournement temporel selon un quatrième mode de réalisation.

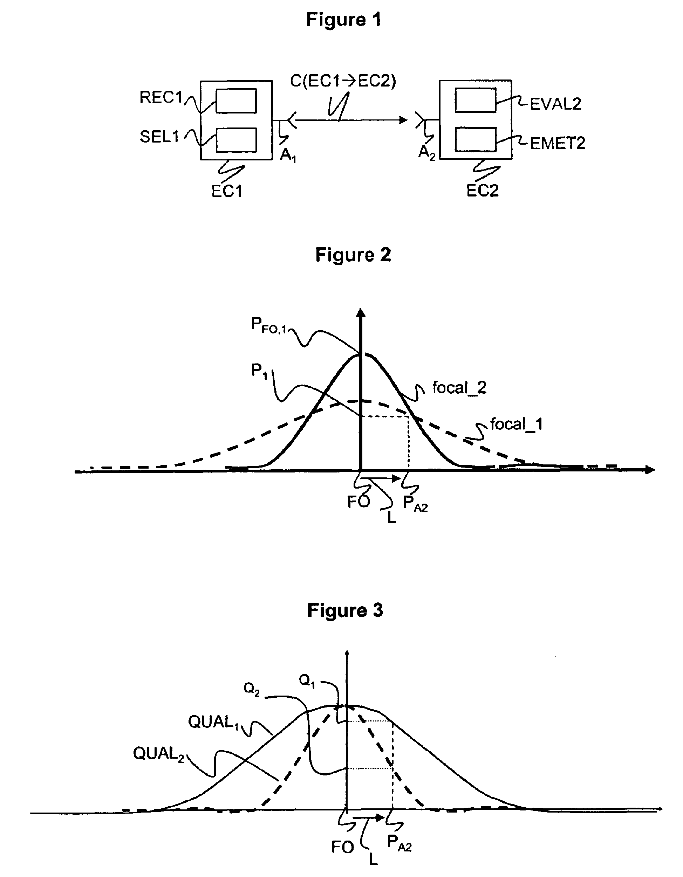

En référence à la **figure 1**, une entité communicante EC1 est apte à communiquer avec une entité destinataire EC2 au travers d'un réseau de communication radio non représenté sur la figure.

Par exemple, le réseau de communication radio est un réseau de radiocommunication cellulaire de type UMTS (pour "Universal Mobile Communication System" en anglais) défini par l'organisme de spécification 3GPP (pour "3rd Generation Partneship Project" en anglais), et ses évolutions dont le 3GPP-LTE (pour "Long Term Evolution" en anglais) ou bien encore un réseau de communication radio de type WIMAX (pour "Worldwide Interoperability for Microwave Access" en anglais)

Les entités communicantes peuvent être des terminaux mobiles, des stations de base terrestre ou satellitaires, des points d'accès, ou tout équipement équipé d'une carte communicante.

Par soucis de clarté, l'invention est présentée pour la transmission unidirectionnelle d'un signal de données de l'entité communicante EC1 à destination d'une entité communicante EC2. L'invention concerne également les transmissions bidirectionnelles et concerne également des entités communicantes comportant plusieurs antennes d'émission ou de réception.

L'entité communicante d'origine EC1 est apte à émettre un signal de données à partir d'une antenne $A_1$ à destination de l'entité communicante destinataire EC2.

L'entité communicante destinataire EC2 est agencée pour recevoir le signal de données et de restituer les données à partir du signal reçu sur une antenne $A_2$.

Un signal de données est pré filtré par application de coefficients d'une réponse impulsionnelle estimée retournée temporellement. La réponse impulsionnelle est représentative du canal de propagation $C(E1{\rightarrow}E2)$ entre l'antenne de l'entité communicante d'origine $A_1$, dite antenne d'origine, et l'antenne de l'entité communicante destinataire $A_2$, dite antenne destinataire.

Dans le cas d'une transmission en mode TDD, les transmissions dans un premier sens, par exemple de l'entité communicante d'origine vers l'entité communicante destinataire, et les transmission dans un deuxième sens, inverse du premier sens, s'effectuent sur une même fréquence porteuse à des instants différents. L'estimation de la réponse impulsionnelle du canal de propagation est classiquement réalisée par l'entité communicante d'origine à partir de l'analyse des signaux de transmission du deuxième sens.

Dans le cas d'une transmission en mode FDD, les transmissions dans le premier sens et les transmissions dans le sens inverse sont effectuées dans des bandes de fréquences distinctes. La connaissance par l'entité communicante d'origine du canal de propagation correspondant au premier sens de transmission peut être, par exemple, obtenue par la délivrance d'une estimation du canal de propagation effectuée par l'entité communicante destinataire.

Selon le mode de transmission considéré, l'entité communicante d'origine ou l'entité communicante destinataire est ainsi agencée pour réaliser l'estimation d'un canal de propagation Si cette estimation est réalisée par l'entité communicante destinataire, celle-ci est apte à délivrer l'estimation à l'entité communicante d'origine, ou à délivrer des coefficients de pré-égalisation obtenus par retournement temporel de l'estimation.

Dans la **figure 1** sont seulement représentés des moyens inclus dans l'entité communicante d'origine EC1 et dans l'entité communicante destinataire EC2 en relation avec l'invention.

L'entité communicante d'origine EC1 et l'entité communicante destinataire EC2 comportent en outre une unité centrale de commande, non représentée, à laquelle les moyens inclus sont reliés, et destinée à contrôler le fonctionnement de ces moyens.

L'entité communicante d'origine comporte

- un récepteur REC1 agencé pour recevoir une demande de modification de focalisation émise par l'entité communicante destinataire,
- un sélecteur SEL1 agencé pour modifier une fréquence porteuse pour l'émission des signaux de données et/ou un délai de latence. Le délai de latence est défini par un intervalle de temps configurable séparant l'estimation de la réponse impulsionnelle du canal de propagation et la réception du signal pré-égalisé par retournement temporel de cette estimation.

L'entité communicante destinataire comporte:

- un évaluateur EVAL2 agencé pour évaluer une qualité relative de focalisation, à partir d'un signal reçu par l'antenne destinataire, par rapport à une qualité à un point focal,
- un émetteur EMET2 agencé pour demander une modification de focalisation à destination de l'entité communicante d'origine.

Le fonctionnement des moyens présentes ci dessus est détaillé dans la suite par la description du procédé de contrôle de focalisation d'un signal pré-égalisé par retournement temporel.

En particulier, l'évaluateur EVAL2 d'évaluation de la qualité relative de focalisation à partir d'un signal reçu par l'entité communicante destinataire EC2 est décrit en référence aux **figures 2 et 3**.

L'évaluateur EVAL2 évalue la qualité relative de focalisation du signal reçu sur l'antenne destinataire $A_2$ par rapport à une valeur de qualité, pour un point focal, d'une représentation normalisée d'une courbe de puissance reçue. La représentation normalisée d'une courbe de puissance reçue en fonction d'une distance entre l'antenne destinataire et le point focal est également décrite en relation avec les **figures 2 et 3**.

La puissance d'un signal pré-égalisé reçu sur l'antenne destinataire $A_2$ détermine, la qualité du signal, et ainsi une qualité de service qui peut être par exemple un débit offert ou bien encore un taux d'erreur sur les données. En l'absence de mouvement relatif v de l'entité communicante d'origine EC1 par rapport à l'entité communicante destinataire EC2, et en l'absence de délai de latence $D_L$, la puissance d'un signal pré-égalisé par retournement temporel est maximum au point de convergence des ondes, dit point focal, qui se situe au niveau de l'antenne destinataire. Le délai de latence $D_L$ doit être compris comme l'intervalle de temps configurable séparant l'estimation de la réponse impulsionnelle du canal de propagation et la réception du signal pré-égalisé par le retournement temporel de cette estimation. Le point focal correspond ainsi à la position de l'antenne destinataire relativement à l'antenne d'origine avant que ne s'écoule le délai de latence.

Dès que les entités communicantes se déplacent pendant la durée de latence, le point focal n'est plus respecté. Cette transgression s'exprime en fonction du délai de latence $D_L$ et du mouvement relatif v de l'entité communicante d'origine par rapport à l'entité communicante destinataire. La distance entre l'antenne destinataire et le point focal est ainsi donnée par le produit du mouvement relatif v, par exemple sous forme d'une vitesse, et du temps de latence:

$$L = v \cdot D_L.$$

Le mouvement relatif v doit être compris dans la suite comme le déplacement de l'entité communicante d'origine vue de l'entité communicante destinataire.

Lorsque l'antenne destinataire est distante du point focal, par exemple pour un délai de latence non adapté ou lors d'un déplacement d'une ou des deux entités communicantes, la puissance n'est plus maximum. La **figure 2** représente ainsi deux exemples de représentation de courbe de puissance reçue en fonction de la distance entre l'antenne destinataire et le point focal. La fonction focal_1, correspondant à l'émission d'un signal pré-égalisé émis sur une fréquence porteuse $f_1$, est maximum au point focal FO et diminue monotonement en fonction de la distance L au point focal.

Pour une position de l'antenne destinataire $P_{A2}$ à une distance L du point focal, la puissance reçue $P_1$ est inférieure à la puissance reçue $P_{FO.1}$ au point focal.

L'étendue et la forme d'une courbe de puissance reçue est fonction du canal de propagation et notamment de la fréquence porteuse du signal. La représentation de la courbe de puissance reçue s'élargie lorsque la fréquence porteuse diminue. Ainsi, la fonction focal_1, correspondant à une fréquence $f_1$ plus basse que la fréquence porteuse $f_2$, est plus étendue que la fonction focal_2.

Les propriétés ci-dessus sont par exemples démontrés dans l'article intitulé "Signal Frequency and Bandwidth Effects on the Performance of UWB Time-Reversal Technique", dont les auteurs sont A. Khaleghi et G. El Klein présenté en 2007 lors de la conférence "Loughborough Antennas and Propagation Conference", pages 97 à 100.

Dans le cas général la qualification de la qualité de focalisation peut s'appuyer sur une représentation de la courbe de puissance reçue. Cette représentation exprime la variation de la qualité en fonction de la distance au point focal et dépend de la fréquence porteuse du signal. La représentation est telle que

- sa valeur maximum est atteinte au point focal,
- elle est monotone décroissante en fonction de la distance entre l'antenne destinataire et le point focal.

On peut également considérer une représentation dite normalisée de la courbe de puissance reçue pour laquelle la valeur maximum est identique pour toutes les fréquences porteuses. La représentation normalisée est une fonction décroissante monotone de la distance au point focal et telle que, pour une distance donnée L entre l'antenne destinataire et le point focal, si $Q_1$ et $Q_2$ sont deux valeurs de qualité relative de focalisation pour des fréquences porteuses respectives $f_1$ et $f_2$, $f_1$ inférieure $f_2$, alors $Q_1$ est supérieure à $Q_2$. Ainsi, pour une position $P_{A2}$ de l'antenne destinataire à une distance L du point focal, la valeur $Q_1$ de qualité relative de focalisation, correspondant à l'émission d'un signal pré-égalisé pour la fréquence porteuse $f_1$, est supérieure à la valeur $Q_2$ de qualité relative de focalisation, correspondant à l'émission d'un signal pré-égalisé pour la fréquence porteuse $f_2$.

La **figure 3** illustre des représentations normalisées de courbes de puissance reçue, la courbe $QUAL_1$ correspondant à l'émission d'un signal pré-égalisé émis sur une fréquence $f_1$, et la courbe $QUAL_2$ correspondant à l'émission d'un signal pré-égalisé émis sur une fréquence $f_2$, telle que la fréquence $f_1$ soit inférieure à la fréquence $f_2$.

La qualité relative de focalisation d'un signal reçu sur l'antenne destinataire est ainsi évaluée par rapport à la valeur de la représentation normalisée selon la fréquence porteuse du signal.

Des évaluations de qualité relative de focalisation sont illustrées de façon non limitative par les exemples suivants pour lesquels les représentations normalisées vérifient les propriétés précédemment décrites.

Ainsi, la qualité relative de focalisation est évaluée par l'évaluateur EVAL2 à partir de la mesure du mouvement relatif v afin de déterminer une distance L entre l'antenne destinataire et le point focal. Cette distance L est ainsi déterminée par le produit du délai de latence $D_L$ et de l'estimation du mouvement relatif v, par exemple sous la forme d'une vitesse, telle que:

$$L = v \cdot D_L.$$

La qualité relative de focalisation $Q_v$ s'exprime alors en fonction de la longueur d'onde $\lambda$ de la fréquence porteuse $f_p$ du signal pré-égalisé émis par l'antenne d'origine, avec $\lambda = c/f_p$, c désignant la célérité de la lumière, telle que

$$Q_v = \frac{(\lambda/2) - L}{(\lambda/2)}$$

La qualité relative de focalisation $Q_{Bessel}$ peut également être évaluée à partir de la modélisation de la courbe de puissance reçue par une fonction de Bessel d'ordre 0 telle que:

$$Q_{Bessel} = Bessel\left(\frac{L}{\lambda}\right) .$$

La qualité relative de focalisation peut également être évaluée à partir d'une estimation de la symétrie temporelle du signal reçu. A cet effet, l'évaluateur EVAL2 évalue, pour toute fréquence porteuse $f_k$ de la bande passante $B_{EC}$ allouée à l'entité destinataire, un paramètre dit indice de symétrie du signal donné par:

$$IND_k = \frac{Re_k^2}{(Re_k + Im_k)^2} ,$$

avec $Re_k$ et $Im_k$ respectivement les parties réelle et imaginaire de la représentation fréquentielle $S(f_k)$ du signal de données $s(t)$ reçu. La qualité relative de focalisation $Q_{sym}$ est ainsi donnée par

$$Q_{sym} = \frac{\sum_{k=1}^{N_f} IND_k}{N_f} ,$$

où $N_f$ désigne le nombre de fréquences porteuses allouées à l'entité communicante destinataire EC2 dans la bande $B_{EC}$.
La qualité relative de focalisation peut également être évaluée à partir d'une estimation de la symétrie temporelle et en puissance du signal reçu. L'évaluateur EVAL2 de l'entité communicante destinataire EC2 détermine N valeurs de symétrie temporelle $Sym_t(n)$ du signal reçu pour différents écarts temporels par rapport à l'échantillon du signal reçu à un instant $t_{max}$ correspondant à l'échantillon $s(t_{max})$ de valeur la plus élevée:

$$Sym_t(n) = \frac{\left| s(t_{max} + t_{n+max}) - s(t_{max} - t_{n+max}) \right| / \sqrt{E}}{\left( t_{n+max} - t_{max} \right) / \tau}$$

où E est l'énergie du signal reçu, et $\tau$ le facteur d'étalement temporel estimé du signal reçu, n variant de 1 à N.
Le nombre de valeurs de symétrie N est un paramètre configurable de l'entité communicante destinataire, la précision sur l'évaluation de la qualité relative de focalisation étant croissante avec N.
De plus, l'évaluateur EVAL2 de l'entité communicante destinataire détermine N valeurs de symétrie $Sym_p(n)$ de la puissance du signal reçu pour différents écarts temporels par rapport à l'échantillon du signal à l'instant $t_{max}$ telles que:

$$Sym_p(n) = \frac{\left[ \sqrt{\left| s(t_{max} + t_{n+max}) \right|^2 + \left| s(t_{n\,max} - t_{n+max}) \right|^2} \right] / \sqrt{E}}{2\left( t_{n+max} - t_{max} \right) / \tau}$$

La qualité relative de focalisation $Q_{symp}$ est ainsi donnée par :

$$Q_{symp} = \frac{1}{N} \sum_{n=1}^{N} \frac{\left(\pi^2/4\right) - \left[atan(Sym_t(n)) \cdot atan(Sym_p(n))\right]}{\pi^2/4},$$

où atan désigne l'opérateur arc tangente.

La qualité relative de focalisation peut également être évaluée à partir de l'estimation d'un facteur d'étalement temporel du signal reçu relativement à l'étalement temporel d'un signal référent au point focal. Le facteur d'étalement temporel d'un signal est également communément mentionné dans la littérature par le terme anglais correspondant "delay spread". A cet effet, l'entité communicante d'origine EC1 émet une impulsion à destination de l'entité communicante destinataire EC2. Cette dernière reçoit ainsi une réponse impulsionnelle $h_c(t)$ du canal de propagation entre l'antenne d'origine et l'antenne destinataire. L'évaluateur EVAL2 de l'entité communicante destinataire construit un signal référent ref(t) à partir de l'impulsion reçue à laquelle est appliqué le retournement temporel de l'estimation de la réponse impulsionnelle du canal de propagation $h_{rt}(t)$ utilisée pour la pré-égalisation du signal. Dans le domaine fréquentiel, le signal référent est ainsi donné par:

$$REF(f) = H_{rt}(f)^* H_c(f).$$

La qualité relative de focalisation $Q_{DS}$ est alors donnée par le rapport entre le facteur d'étalement temporel du signal référent $DS_{ref}$ et le facteur d'étalement du signal de données $DS_{sig}$:

$$Q_{DS} = \frac{DS_{ref}}{DS_{sig}}.$$

La qualité relative de focalisation peut également être évaluée à partir d'un rapport entre la puissance du signal reçu et la puissance d'un signal référent. Ce rapport de puissance est représentatif d'une estimation de l'auto corrélation du canal de propagation.

A cet effet, l'entité communicante d'origine émet une impulsion ou un signal pilote à destination de l'entité communicante destinataire. L'évaluateur EVAL2 de l'entité communicante destinataire EC2 estime une réponse impulsionnelle $h_c(t)$ du canal de propagation entre l'entité communicante d'origine et l'entité communicante destinataire, ou de façon équivalente la fonction de transfert du canal de propagation $H_c(f)$.

L'évaluateur EVAL2 détermine la puissance du canal de propagation. Par exemple la puissance du canal de propagation $P_c$ est évaluée relativement à la bande passante B du signal et à la taille W(B) de la bande passante selon toute méthode d'évaluation de puissance bien connue de l'homme du métier :

$$P_c = \frac{1}{W(B)} \int_{f \in B} \left\| H_c(f)^* \times H_c(f) \right\|^2$$

L'évaluateur EVAL2 détermine également la puissance d'un canal équivalent $P_{eq}$. Le canal équivalent est obtenu par le produit du conjugué de la fonction de transfert du canal de propagation $H_{rt}(f)$, correspondant à la réponse impulsionnelle utilisée pour la focalisation du signal, et de la fonction de transfert $H_c(f)$:

$$H_{eq}(f) = H_{rt}(f)^* \quad H_c(f)$$

La qualité relative de focalisation $Q_{EQ}$ est alors donnée par le rapport de puissance:

$$Q_{EQ} = \frac{\|P_{eq}\|^2}{\|P_c\|^2} .$$

L'évaluation de la qualité relative de focalisation peut également être obtenue par une combinaison des différentes évaluations précédemment décrites. Ainsi, considérant les évaluations $Q_v$, $Q_{Bessel}$, $Q_{sym}$, $Q_{symp}$, $Q_{DS}$, $Q_{EQ}$, respectivement définies à partir du mouvement relatif et de la longueur d'onde, du mouvement relatif et de la fonction de Bessel, de l'estimation de la symétrie temporelle du signal reçu, de l'estimation de la symétrie en temps et en puissance, du facteur d'étalement temporel, et de l'auto corrélation du canal, la qualité relative de focalisation est obtenue par application d'une fonction combinatoire des évaluations $Q_v$, $Q_{Bessel}$, $Q_{sym}$, $Q_{symp}$, $Q_{DS}$, et $Q_{EQ}$, monotone croissante.

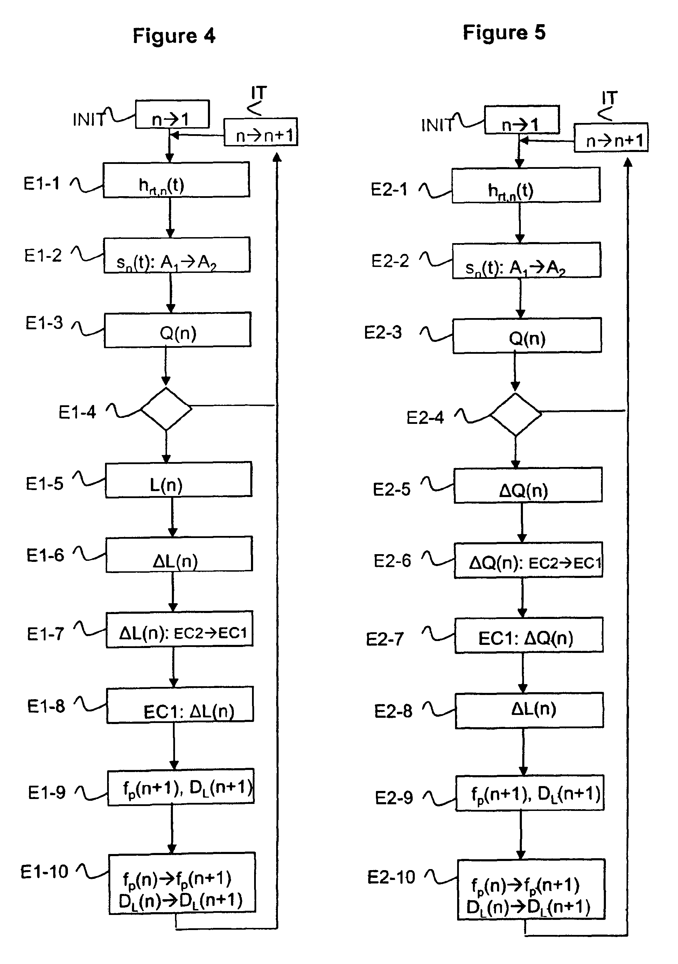

Un premier mode de réalisation du procédé de contrôle dynamique de la focalisation d'un signal pré-égalisé par retournement temporel d'une estimation d'un canal de propagation entre une antenne d'origine $A_1$ et une antenne destinataire $A_2$ est maintenant décrit en référence à la **figure 4**.

Le procédé est réitéré en fonction d'une fréquence d'itération $F_{iter}$ configurable. Pendant la durée de transmission de données de l'entité communicante d'origine EC1 vers l'entité communicante destinataire EC2, la fréquence d'itération peut, par exemple, être déterminée en fonction de la fréquence d'obtention d'une estimation de canal performante. Les itérations sont symbolisées par une étape IT d'itération d'un indice n. Une étape préalable d'initialisation INIT correspond à l'indice n=1.

Lors de l'étape d'initialisation INIT, l'entité-communicante d'origine sélectionne une fréquence porteuse $f_p(1)$ et un délai de latence $D_L(1)$ pour l'émission d'un signal de données pré-égalisé par retournement temporel. La fréquence porteuse et le délai de latence correspondant à la $n^{ième}$ itération du procédé sont notés respectivement $f_p(n)$ et $D_L(n)$.

A l'étape E1-1, l'entité communicante d'origine détermine des coefficients de pré-égalisation à appliquer à un signal de données. Les coefficients de pré-égalisation appliqués à un signal de données ou de référence, émis à un instant courant, sont obtenus par le retournement temporel d'une réponse impulsionnelle estimée $h_{rt,n}(t)$ d'un canal de propagation $C_n(EC1{\rightarrow}EC2)$ entre l'antenne d'origine $A_1$ et l'antenne destinataire $A_2$.

Cette détermination peut être réalisée, par exemple, par émission d'impulsions ou bien encore de pilotes par l'entité communicante d'origine, suivie d'une estimation du canal de propagation par l'entité communicante d'origine ou destinataire respectivement, selon le mode de transmission FDD ou TDD, respectivement. Dans le cas d'une estimation effectuée par l'entité destinataire, celle-ci délivre l'estimation à l'entité communicante d'origine.

A l'étape E1-2, l'entité communicante d'origine émet à partir de l'antenne d'origine $A_1$ le signal de données pré-égalisé $s_n(t)$ obtenu après pré filtrage par les coefficients de pré-égalisation déterminés lors de l'étape E1-1.

A l'étape E1-3, l'évaluateur EVAL2 de l'entité communicante destinataire évalue une qualité relative de focalisation $Q(n)$ à partir du signal reçu, par exemple selon l'une des méthodes précédemment décrites.

A l'étape E1-4, l'entité communicante destinataire EC2 détermine, au vue de la qualité relative de focalisation $Q(n)$, s'il y a lieu de demander une modification de focalisation à l'entité communicante d'origine EC1. Un critère appliqué peut par exemple et de façon non limitative correspondre à la comparaison de la qualité relative de focalisation $Q(n)$ à une qualité relative de focalisation cible $Q_{cible}$. Si l'écart entre la qualité relative de focalisation et la qualité relative de focalisation cible est inférieure à un seuil configurable, l'entité communicante destinataire ne demande pas de modification de focalisation.

S'il n'y a pas lieu de demander une modification de focalisation, les itérations E1-5 à E1-10 ne sont pas effectuées.

En variante, l'entité communicante destinataire n'applique pas de critère et les itérations E1-5 et suivantes sont effectuées systématiquement.

A l'étape E1-5, l'entité communicante destinataire estime une distance $L(n)$ entre l'antenne destinataire et le point focal à l'instant courant. Le point focal correspond à la position de l'antenne destinataire relativement à l'antenne d'origine à la $n^{ième}$ itération avant que ne s'écoule le délai de latence.

L'estimation de la distance $L(n)$ peut par exemple être effectuée à partir de la lecture d'une table de qualité relative de focalisation. La table de qualité configurable comporte des points de mesures pour diverses positions de l'antenne destinataire. Ces mesures peuvent être réalisées au préalable par des simulations ou bien par des évaluations de qualité relative de focalisation effectuées lors d'une période d'apprentissage par l'entité communicante destinataire.

Dans le cas d'une évaluation de la qualité relative de focalisation par une fonction de Bessel d'ordre 0 tel que précédemment décrit, l'évaluation de la distance peut être également réalisée à partir de la fonction de Bessel telle que:

$$\text{Bessel}(L(n))=Q(n).$$

A l'étape E1-6, l'entité communicante destinataire estime une distance $\Delta L(n)$ entre l'antenne destinataire et une position $P_{cible}$ correspondant à la qualité relative de focalisation cible $Q_{cible}$.

L'estimation de la distance $\Delta L(n)$ peut par exemple être effectuée à partir de la lecture de la table de qualité relative précédemment décrite permettant d'évaluer une distance cible $L_{cible}$ entre la position $P_{cible}$ et le point focal. La distance $\Delta L(n)$ est alors obtenue par la différence entre $L(n)$ et $L_{cible}$.

Dans le cas d'une évaluation de la qualité relative de focalisation par une fonction de Bessel d'ordre 0 tel que précédemment décrit, l'évaluation de la distance cible $L_{cible}$ peut être également réalisée à partir de la fonction de Bessel telle que:

$$\text{Bessel}(L_{cible}) = Q_{cible}$$

En variante, l'estimation de la distance $\Delta L(n)$ peut également être effectuée à partir de la valeur $L_{cible}$ mémorisée dans l'entité communicante destinataire.

A l'étape E1-7, l'émetteur EMET2 de l'entité communicante destinataire demande une modification de focalisation à destination de l'entité communicante d'origine.

Cette demande correspond à l'émission d'une requête comportant l'estimation de la distance $\Delta L(n)$ déterminée lors de l'étape E1-6.

A l'étape E1-8, le récepteur REC1 de l'entité communicante d'origine reçoit la demande de modification de focalisation et extrait l'estimation de la distance $\Delta L(n)$ contenue dans la requête.

A l'étape E1-9, l'entité communicante d'origine sélectionne une valeur pour au moins un paramètre choisi parmi une fréquence porteuse et un délai de latence.

La sélection se fait à partir des propriétés de la représentation normalisée d'une courbe de puissance reçue illustrée en figure 3 qui est telle que:

- d'une part elle est décroissante en fonction de la distance au point focal et donc en fonction du produit du mouvement relatif v et du délai de latence $D_L$,
- et d'autre part est telle que pour une distance donnée $L(n)$ entre l'antenne destinataire et le point focal, si $Q_1$ et $Q_2$ sont deux valeurs de qualité relative de focalisation pour des fréquences porteuses respectives $f_1$ et $f_2$, $f_1$ inférieure $f_2$, alors $Q_1$ est supérieure à $Q_2$.

L'entité communicante d'origine peut ainsi sélectionner une nouvelle fréquence porteuse, ou bien sélectionner un nouveau le délai de latence, ou bien encore sélectionner conjointement la fréquence porteuse et le délai de latence afin d'honorer la demande de modification de focalisation. La sélection se fait ainsi par comparaison des différentes représentations normalisées des courbes de puissance reçue pour différentes fréquences porteuses. Ces représentations normalisées de courbe de puissance reçue sont par exemple pré-mémorisées dans l'entité communicante d'origine sous la forme de table de qualité.

La sélection peut s'effectuer par choix d'une fréquence porteuse dans une même bande de fréquence, mais également dans une bande de fréquence distincte ou bien encore par choix d'un autre système de communication radio

A l'étape E1-10, le sélecteur SEL1 de l'entité communicante d'origine modifie les paramètres de transmission sélectionnés lors de l'étape E1-9. Les étapes du procédé sont alors réitérées avec ce nouveau couple de paramètres $f_p(n+1)$, $D_L(n+1)$.

La prise en compte de ces nouveaux paramètres par l'entité communicante destinataire peut s'effectuer après notification par l'entité communicante d'origine, ou bien encore par des méthodes de synchronisation temporelle et fréquentielle de type aveugles bien connues de l'homme du métier.

Un deuxième mode de réalisation du procédé de contrôle dynamique de la focalisation d'un signal pré-égalisé par retournement temporel entre une entité communicante d'origine EC1 et une entité communicante destinataire EC2 est maintenant décrit en référence à la **figure 5**.

Le procédé est réitéré en fonction d'une fréquence d'itération $F_{iter}$ configurable. Pendant la durée de transmission de données de l'entité communicante d'origine vers l'entité communicante destinataire, la fréquence d'itération peut, par exemple, être déterminée en fonction de la fréquence d'obtention d'une estimation de canal performante. Les itérations sont symbolisées par une étape IT d'itération d'un indice n. Une étape préalable d'initialisation INIT correspond à l'indice n=1.

Lors de l'étape d'initialisation INIT, l'entité communicante d'origine sélectionne une fréquence porteuse $f_p(1)$ et un délai de latence $D_L(1)$ pour l'émission d'un signal de données pré-égalisé par retournement temporel. La fréquence porteuse et le délai de latence correspondant à la $n^{ième}$ itération du procédé sont notés respectivement $f_p(n)$ et $D_L(n)$.

A l'étape E2-1, l'entité communicante d'origine détermine des coefficients de pré-égalisation à appliquer à un signal de données. Les coefficients de pré-égalisation appliqués à un signal de données ou de référence, émis à un instant courant, sont donnés par le retournement temporel d'une réponse impulsionnelle estimée $h_{rt,n}(t)$ d'un canal de propagation $C_n(EC1 \rightarrow EC2)$ entre l'antenne d'origine $A_1$ et l'antenne destinataire $A_2$.

Cette détermination peut être réalisée, par exemple, par émission d'impulsions ou bien encore de pilotes par l'entité communicante d'origine, suivie d'une estimation du canal de propagation par l'entité communicante d'origine ou destinataire respectivement, selon le mode de transmission FDD ou TDD, respectivement. Dans le cas d'une estimation effectuée par l'entité destinataire, celle-ci délivre l'estimation à l'entité communicante d'origine.

A l'étape E2-2, l'entité communicante d'origine émet à partir de l'antenne d'origine $A_1$ le signal de données pré-égalisé $s_n(t)$ obtenu après pré filtrage par les coefficients de pré-égalisation déterminés lors de l'étape E2-1.

A l'étape E2-3, l'évaluateur EVAL2 de l'entité communicante destinataire évalue une qualité relative de focalisation $Q(n)$ à partir du signal reçu par exemple selon l'une des méthodes précédemment décrites.

A l'étape E2-4, l'entité communicante destinataire EC2 détermine, au vue de la qualité relative de focalisation $Q(n)$, s'il y a lieu de demander une modification de focalisation à l'entité communicante d'origine EC1. Un critère appliqué peut par exemple et de façon non limitative correspondre à la comparaison de la qualité relative de focalisation $Q(n)$ à une qualité relative de focalisation cible $Q_{cible}$. Si l'écart entre la qualité relative de focalisation et la qualité relative de focalisation cible est inférieure à un seuil configurable, l'entité communicante destinataire ne demande pas de modification de focalisation.

S'il n'y a pas lieu de demander une modification de focalisation, les itérations E2-5 à E2-10 ne sont pas effectuées.

En variante, l'entité communicante destinataire n'applique pas de critère et les itérations E2-5 et suivantes sont effectuées systématiquement.

A l'étape E2-5, l'entité communicante destinataire estime un écart de qualité relative $\Delta Q(n)$ entre la qualité relative de focalisation cible $Q_{cible}$ et la qualité relative de focalisation $Q(n)$.

A l'étape E2-6, l'émetteur EMET2 de l'entité communicante destinataire demande une modification de focalisation à destination de l'entité communicante d'origine.

Cette demande correspond à l'émission d'une requête comportant l'estimation de l'écart de qualité relative $\Delta Q(n)$ déterminée lors de l'étape E2-5.

A l'étape E2-7, le récepteur REC1 de l'entité communicante d'origine reçoit la demande de modification de focalisation et extrait de la requête l'estimation de l'écart de qualité relative $\Delta Q(n)$.

A l'étape E2-8, l'entité destinataire d'origine estime, à partir de la valeur de $\Delta Q(n)$, une distance $\Delta L(n)$ entre l'antenne destinataire et une position $P_{cible}$ correspondant à la qualité relative de focalisation cible $Q_{cible}$.

L'estimation de la distance $\Delta L(n)$ peut par exemple être effectuée à partir de la lecture d'une table de qualité relative configurable comprenant des points de mesures de qualité relative de focalisation en fonction de la distance au point focal. Ces mesures peuvent être réalisées au préalable par des simulations.

Dans le cas d'une évaluation de la qualité relative de focalisation par une fonction de Bessel d'ordre 0 tel que précédemment décrit, l'estimation de la distance la table de qualité relative de focalisation $\Delta L(n)$ peut être également obtenue à partir de l'application de la fonction de Bessel.

A l'étape E2-9, l'entité communicante d'origine sélectionne une valeur pour au moins un paramètre choisi parmi une fréquence porteuse et un délai de latence.

La sélection se fait à partir des propriétés de la représentation normalisée d'une courbe de puissance du signal reçu illustrée en figure 3 qui est telle que:

- d'une part elle est décroissante en fonction de la distance au point focal et donc en fonction du produit du mouvement relatif v et du délai de latence $D_L$,
- et d'autre part est telle que pour une distance donnée $L(n)$ entre l'antenne destinataire et le point focal, si $Q_1$ et $Q_2$ sont deux valeurs de qualité relative de focalisation pour des fréquences porteuses respectives $f_1$ et $f_2$, $f_1$ inférieure $f_2$, alors $Q_1$ est supérieure à Q2.

L'entité communicante d'origine peut ainsi sélectionner une nouvelle fréquence porteuse, ou bien sélectionner un nouveau le délai de latence, ou bien encore sélectionner conjointement la fréquence porteuse et le délai de latence afin d'honorer la demande de modification de focalisation. La sélection se fait ainsi par comparaison des différentes représentations normalisées pour les différentes fréquences porteuses. Ces représentations normalisées de courbes de puissance reçues sont par exemple pré-mémorisées dans l'entité communicante d'origine sous la forme de table de qualité.

La sélection peut s'effectuer par choix d'une fréquence porteuse dans une même bande de fréquence, mais également dans une bande de fréquence distincte ou bien encore par choix d'un autre système de communication radio.

A l'étape E2-10, le sélecteur SEL1 de l'entité communicante d'origine modifie les paramètres de transmission sélectionnés lors de l'étape E2-9. Les étapes du procédé sont réitérées avec ce nouveau couple de paramètres $f_p(n+1)$,

$D_L(n+1)$.

La prise en compte de ces nouveaux paramètres par l'entité communicante destinataire peut s'effectuer après notification par l'entité communicante d'origine, ou bien encore par des méthodes de synchronisation temporelle et fréquentielle de type aveugles bien connues de l'homme du métier.

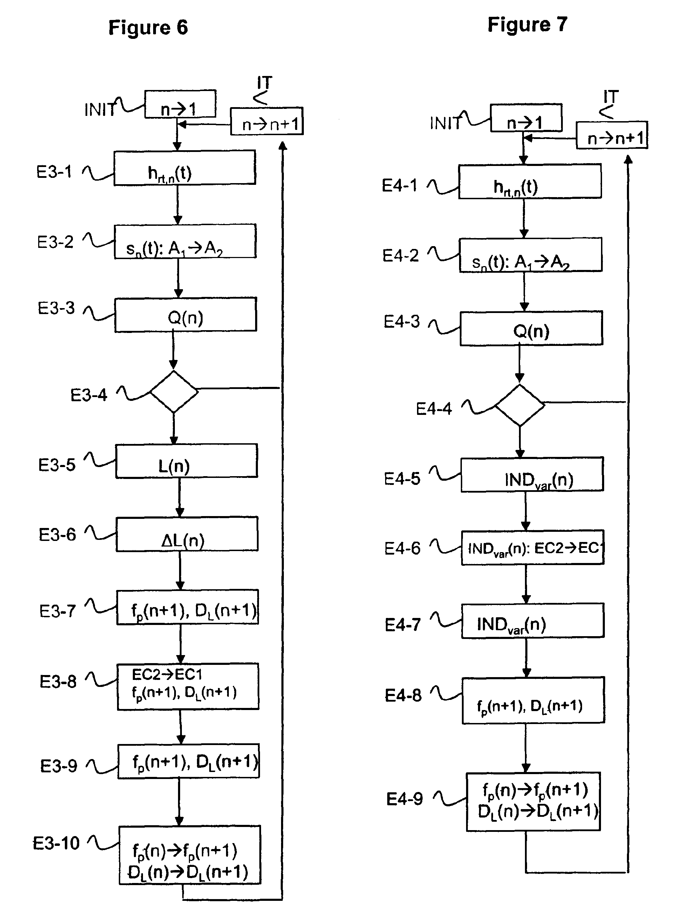

Un troisième mode de réalisation du procédé de contrôle dynamique de la focalisation d'un signal pré-égalisé par retournement temporel entre une entité communicante d'origine EC1 et une entité communicante destinataire EC2 est maintenant décrit en référence à la **figure 6**.

Le procédé est réitéré en fonction d'une fréquence d'itération $F_{iter}$ configurable. Pendant la durée de transmission de données de l'entité communicante d'origine vers l'entité communicante destinataire, la fréquence d'itération peut, par exemple, être déterminée en fonction de la fréquence d'obtention d'une estimation de canal performante. Les itérations sont symbolisées par une étape IT d'itération d'un indice n. Une étape préalable d'initialisation INIT correspond à l'indice n=1.

Lors de l'étape d'initialisation INIT, l'entité communicante d'origine sélectionne une fréquence porteuse $f_p(1)$ et un délai de latence $D_L(1)$ pour l'émission d'un signal de données pré-égalisé par retournement temporel. La fréquence porteuse et le délai de latence correspondant à la $n^{ième}$ itération du procédé sont notés respectivement $f_p(n)$ et $D_L(n)$.

A l'étape E3-1, l'entité communicante d'origine détermine des coefficients de pré-égalisation à appliquer à un signal de données. Les coefficients de pré-égalisation appliqués à un signal de données ou de référence, émis à un instant courant, sont donnés par le retournement temporel d'une réponse impulsionnelle estimée $h_{rt.n}(t)$ d'un canal de propagation $C_n(EC1 \rightarrow EC2)$ entre l'antenne d'origine $A_1$ et l'antenne destinataire $A_2$.

Cette détermination peut être réalisée, par exemple, par émission d'impulsions ou bien encore de pilotes par l'entité communicante d'origine, suivie d'une estimation du canal de propagation par l'entité communicante d'origine ou destinataire respectivement, selon le mode de transmission FDD ou TDD, respectivement. Dans le cas d'une estimation effectuée par l'entité destinataire, celle-ci délivre l'estimation à l'entité communicante d'origine.

A l'étape E3-2, l'entité communicante d'origine émet à partir de l'antenne d'origine $A_1$ le signal de données pré-égalisé $s_n(t)$ obtenu après pré filtrage par les coefficients de pré-égalisation déterminés lors de l'étape E3-1.

A l'étape E3-3, l'évaluateur EVAL2 de l'entité communicante destinataire évalue une qualité relative de focalisation Q(n) à partir du signal reçu, par exemple selon l'une des méthodes précédemment décrites.

A l'étape E3-4, l'entité communicante destinataire EC2 détermine, au vue de la qualité relative de focalisation Q(n), s'il y a lieu de demander une modification de focalisation à l'entité communicante d'origine EC1. Un critère appliqué peut par exemple et de façon non limitative correspondre à la comparaison de la qualité relative de focalisation Q(n) à une qualité relative de focalisation cible $Q_{cible}$. Si l'écart entre la qualité relative de focalisation et la qualité relative de focalisation cible est inférieure à un seuil configurable, l'entité communicante destinataire ne demande pas de modification de focalisation.

S'il n'y a pas lieu de demander une modification de focalisation, les itérations E3-5 à E3-10 ne sont pas effectuées.

En variante, l'entité communicante destinataire n'applique pas de critère et les itérations E3-5 et suivantes sont effectuées systématiquement.

A l'étape E3-5, l'entité communicante destinataire estime une distance L(n) entre l'antenne destinataire et le point focal. Le point focal correspond à la position de l'antenne destinataire relativement à l'antenne d'origine à la $n^{ième}$ itération avant que ne s'écoule le délai de latence.

L'estimation de la distance L(n) peut par exemple être effectuée à partir de la lecture d'une table de qualité relative de focalisation. La table de qualité configurable comporte des points de mesures pour diverses positions de l'antenne destinataire. Ces mesures peuvent être réalisées au préalable par des simulations ou par des évaluations de qualité relative de focalisation effectuées lors d'une période d'apprentissage par l'entité communicante destinataire.

Dans le cas d'une évaluation de la qualité relative de focalisation par une fonction de Bessel d'ordre 0 tel que précédemment décrit, l'évaluation de la distance peut être également réalisée à partir de la fonction de Bessel telle que:

$$\mathrm{Bessel}(L(n)) = Q(n).$$

A l'étape E3-6, l'entité communicante destinataire estime une distance $\Delta L(n)$ entre l'antenne destinataire et une position $P_{cible}$ correspondant à la qualité relative de focalisation cible $Q_{cible}$.

L'estimation de la distance $\Delta L(n)$ peut par exemple être effectuée à partir de la lecture de la table de qualité relative précédemment décrite permettant d'évaluer une distance cible $L_{cible}$ entre la position $P_{cible}$ et le point focal. La distance $\Delta L(n)$ est alors obtenue par la différence entre L(n) et $L_{cible}$.

Dans le cas d'une évaluation de la qualité relative de focalisation par une fonction de Bessel d'ordre 0 tel que précédemment décrit, l'évaluation de la distance cible $L_{cible}$ peut être également réalisée à partir de la fonction de Bessel

telle que:

$$Bessel(L_{cible})=Q_{cible}$$

En variante, l'estimation de la distance $\Delta L(n)$ peut également être effectuée à partir de la valeur $L_{cible}$ configurée au préalable.

A l'étape E3-7, l'entité communicante destinataire sélectionne une valeur pour au moins un paramètre choisi parmi une fréquence porteuse et un délai de latence. La sélection se fait à partir des propriétés de la représentation normalisée de la courbe de puissance du signal reçu illustrées en figure 3 qui est telle que:

- d'une part elle est décroissante en fonction de la distance au point focal et donc en fonction du produit du mouvement relatif v et du délai de latence $D_L$,
- et d'autre part est telle que pour une distance donnée $L(n)$ entre l'antenne destinataire et le point focal, si $Q_1$ et $Q_2$ sont deux valeurs de qualité relative de focalisation pour des fréquences porteuses respectives $f_1$ et $f_2$, $f_1$ inférieure $f_2$, alors $Q_1$ est supérieure à $Q_2$.

L'entité communicante destinataire peut ainsi sélectionner une nouvelle fréquence porteuse, ou bien sélectionner un nouveau le délai de latence, ou bien encore sélectionner conjointement la fréquence porteuse et le délai de latence afin d'honorer la demande de modification de focalisation. La sélection se fait ainsi par comparaison des différentes représentations normalisées pour les différentes fréquences porteuses. Ces représentations normalisées de courbes de puissance reçue sont par exemple pré-mémorisées dans l'entité communicante destinataire sous la forme de table de qualité.

La sélection peut s'effectuer par choix d'une fréquence porteuse dans une même bande de fréquence, mais également dans une bande de fréquence distincte ou bien encore par choix d'un autre système de communication radio

A l'étape E3-8, l'émetteur EMET2 de l'entité communicante destinataire demande une modification de focalisation à destination de l'entité communicante d'origine.

Cette demande correspond à l'émission d'une requête comportant une référence à la valeur de la fréquence sélectionnée et/ou du délai de latence sélectionné.

A l'étape E3-9, le récepteur REC1 de l'entité communicante d'origine reçoit la demande de modification de focalisation et extrait de la requête la référence à la valeur de la fréquence sélectionnée et/ou du délai de latence sélectionné.

A l'étape E3-10, le sélecteur SEL1 de l'entité communicante d'origine modifie les paramètres de transmission sélectionnés lors de l'étape E3-9 par l'entité communicante destinataire.

Les étapes du procédé sont réitérées avec ce nouveau couple de paramètres $f_p(n+1)$, $D_L(n+1)$.

En variante, après réception du message de modification par le récepteur REC1 de l'entité communicante d'origine lors de l'étape E3-9, l'entité communicante d'origine sélectionne une valeur pour au moins un paramètre choisi parmi une fréquence porteuse et un délai de latence à partir de la référence émise par l'entité communicante d'origine. Cette sélection peut s'effectuer tel que décrit en étape E3-6.

Le sélecteur SEL1 de l'entité communicante d'origine modifie alors les paramètres de transmission. Dans ce cas, la prise en compte de ces nouveaux paramètres par l'entité communicante destinataire peut s'effectuer après notification par l'entité communicante d'origine, ou bien encore par des méthodes de synchronisation temporelle et fréquentielle de type aveugles bien connues de l'homme du métier.

Un quatrième mode de réalisation du procédé de contrôle dynamique de la focalisation d'un signal pré-égalisé par retournement temporel entre une entité communicante d'origine EC1 et une entité communicante destinataire EC2 est maintenant décrit en référence à la **figure 7**.

Le procédé est réitéré en fonction d'une fréquence d'itération $F_{iter}$ configurable. Pendant la durée de transmission de données de l'entité communicante d'origine vers l'entité communicante destinataire, la fréquence d'itération peut, par exemple, être déterminée en fonction de la fréquence d'obtention d'une estimation de canal performante. Les itérations sont symbolisées par une étape IT d'itération d'un indice n. Une étape préalable d'initialisation INIT correspond à l'indice n=1.

Lors de l'étape d'initialisation INIT, l'entité communicante d'origine sélectionne une fréquence porteuse $f_p(1)$ et un délai de latence $D_L(1)$ pour l'émission d'un signal de données pré-égalisé par retournement temporel. La fréquence porteuse et le délai de latence correspondant à la $n^{ième}$ itération du procédé sont notés respectivement $f_p(n)$ et $D_L(n)$.

A l'étape E4-1, l'entité communicante d'origine détermine des coefficients de pré-égalisation à appliquer à un signal de données. Les coefficients de pré-égalisation appliqués à un signal de données ou de référence, émis à un instant courant, sont donnés par le retournement temporel d'une réponse impulsionnelle estimée $h_{rt,n}(t)$ d'un canal de

propagation $C_n$(EC1→EC2) entre l'antenne d'origine $A_1$ et l'antenne destinataire $A_2$.

Cette détermination peut être réalisée, par exemple, par émission d'impulsions ou bien encore de pilotes par l'entité communicante d'origine, suivie d'une estimation du canal de propagation par l'entité communicante d'origine ou destinataire respectivement, selon le mode de transmission FDD ou TDD, respectivement. Dans le cas d'une estimation effectuée par l'entité destinataire, celle-ci délivre l'estimation à l'entité communicante d'origine.

A l'étape E4-2, l'entité communicante d'origine émet à partir de l'antenne d'origine $A_1$ le signal de données pré-égalisé $s_n(t)$ obtenu par pré filtrage par les coefficients de pré-égalisation déterminés lors de l'étape E4-1.

A l'étape E4-3, l'évaluateur EVAL2 de l'entité communicante destinataire évalue une qualité relative de focalisation Q(n) à partir du signal reçu, par exemple selon l'une des méthodes précédemment décrites.

A l'étape 4-4, l'entité communicante destinataire EC2 détermine, au vue de la qualité relative de focalisation Q(n), s'il y a lieu de demander une modification de focalisation à l'entité communicante d'origine EC1. Un critère appliqué peut par exemple et de façon non limitative correspondre à la comparaison de la qualité relative de focalisation Q(n) à une qualité relative de focalisation cible $Q_{cible}$. Si l'écart entre la qualité relative de focalisation et la qualité relative de focalisation cible est inférieure à un seuil configurable, l'entité communicante destinataire ne demande pas de modification de focalisation.

S'il n'y a pas lieu de demander une modification de focalisation, les itérations E4-5 à E4-9 ne sont pas effectuées.

En variante, l'entité communicante destinataire n'applique pas de critère et les itérations E4-9 et suivantes sont effectuées systématiquement.

A l'étape E4-5, l'entité communicante destinataire détermine l'écart $\Delta$Q(n) entre la qualité relative de focalisation Q(n) évaluée à l'étape E4-4 et la qualité relative de focalisation cible $Q_{cible}$. Selon les propriétés des courbes de puissance reçue qui sont monotones décroissantes en fonction de la distance au point focal, l'entité destinataire au vue du signe de l'écart $\Delta$Q(n), détermine si l'antenne destinataire est trop proche ou trop éloignée du point focal pour qu'il puisse obtenir la qualité relative de focalisation $Q_{cible}$. L'entité communicante destinataire définit ainsi un indice de variation $IND_{var}(n)$ indiquant son souhait de s'éloigner ou se rapprocher du point focal. L'indice de variation peut par exemple et de façon non limitative être le signe, ou bien encore la valeur de l'écart $\Delta$Q(n).

A l'étape E4-6, l'émetteur EMET2 de l'entité communicante destinataire demande une modification de focalisation à destination de l'entité communicante d'origine.

Cette demande correspond à l'émission d'une requête comportant l'indice de variation $IND_{var}(n)$ déterminé lors de l'étape E1-6.

A l'étape E4-7, le récepteur REC1 de l'entité communicante d'origine reçoit la demande de modification de focalisation et extrait l'indice de variation $IND_{var}(n)$ contenu dans la requête.

A l'étape E4-8, l'entité communicante d'origine sélectionne une valeur pour au moins un paramètre choisi parmi une fréquence porteuse et un délai de latence correspondant à l'indice de variation $IND_{var}(n)$. Ainsi, dans la cas d'un indice correspondant à une demande de rapprochement du point focal, l'entité communicante d'origine sélectionne un couple $[f_p(n+1), D_L(n+1)]$ tel quel le produit $f_p(n+1).D_L(n+1)$ est inférieur au produit $f_p(n).D_L(n)$.

Par exemple, l'entité communicante d'origine sélectionne une fréquence $f_p(n+1)$ inférieure à la fréquence $f_p(n)$, ou bien encore obtenu par un décalage en fréquence d'un valeur -$\Delta$f configurable.

L'entité communicante d'origine peut également sélectionner un délai de latence $D_L(n+1)$ inférieur au délai de latence $D_L(n)$, ou bien encore obtenu par décrément d'un délai configurable $\Delta$t.

L'entité communicante d'origine peut également combiner le changement de fréquence porteuse et le changement de délai de latence. La sélection d'une fréquence porteuse peut également s'effectuer dans une même bande de fréquence, dans une bande de fréquence distincte ou bien encore pour un autre système de communication radio.

De même, dans le cas d'un indice de variation $IND_{var}(n)$ correspondant à une demande d'éloignement du point focal, l'entité communicante d'origine sélectionne un couple $[f_p(n+1), D_L(n+1)]$ tel quel le produit $f_p(n+1).D_L(n+1)$ est supérieur au produit $f_p(n).D_L(n)$.

A l'étape E4-9, le sélecteur SEL1 de l'entité communicante d'origine modifie les paramètres de transmission sélectionnés lors de l'étape E4-8. Les étapes du procédé sont réitérées avec ce nouveau couple de paramètres $f_p(n+1)$, $D_L(n+1)$.

La prise en compte de ces nouveaux paramètres par l'entité communicante destinataire peut s'effectuer après notification par l'entité communicante d'origine, ou bien encore par des méthodes de synchronisation temporelle et fréquentielle de type aveugles bien connues de l'homme du métier.

Le procédé peut également être mis en oeuvre pour une transmission bidirectionnelle. Dans ce mode particulier de réalisation, le procédé est mise en oeuvre dans les deux sens de transmission de telle sorte que des signaux ne soient pas émis simultanément dans les deux sens de transmission.

L'invention décrite ici concerne un dispositif de contrôle dynamique de la focalisation d'un signal pré-égalisé par retournement temporel mis en oeuvre dans une entité communicante destinataire. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante destinataire.

L'invention décrite ici concerne également un dispositif de contrôle dynamique de la focalisation d'un signal pré-égalisé par retournement temporel mis en oeuvre dans une entité communicante d'origine. En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter celles des étapes du procédé selon l'invention mises en oeuvre dans l'entité communicante d'origine.

### Revendications

1. Procédé de contrôle dynamique de la focalisation d'un signal pré-égalisé par retournement temporel d'un canal de propagation estimé entre une antenne d'origine ($A_1$) d'une entité communicante d'origine (EC1) et une antenne destinataire ($A_2$) d'une entité communicante destinataire (EC2) à un instant courant,
le dit procédé étant **caractérisé en ce qu'**il comporte les étapes de :

   - évaluation par l'entité communicante destinataire d'une qualité relative de focalisation (Q(n)) du signal pré-égalisé émis par l'antenne d'origine et reçu par l'antenne destinataire, par rapport à une qualité à un point focal (FO), et si la qualité relative de focalisation évaluée ne satisfait pas un critère prédéterminé,
   - demande, par l'entité communicante destinataire, de modification de focalisation à destination de l'entité communicante d'origine pour un instant suivant.

2. Procédé selon la revendication 1, dans lequel la qualité relative de focalisation (Q(n)) est déterminée à partir d'une représentation normalisée (QUAL1, QUAL2) d'une courbe de puissance reçue, en fonction d'une distance entre l'antenne destinataire et le point focal, ladite représentation étant une fonction décroissante de la distance et ayant un maximum au point focal.

3. Procédé selon l'une quelconque des revendications 1 à 2, dans lequel l'étape de demande de modification comporte :

   - une estimation d'une distance (L(n)) entre l'antenne destinataire à l'instant courant et une position ($P_{cible}$) correspondant à une qualité relative de focalisation cible ($Q_{cible}$),
   - une émission d'une requête de modification à destination de l'entité communicante d'origine comportant l'estimation de ladite distance.

4. Procédé selon l'une quelconque des revendications 1 à 2, dans lequel l'étape de demande de modification comporte

   - une estimation d'un écart ($\Delta L(n)$) entre la valeur de la qualité relative de focalisation évaluée à l'instant courant et une valeur d'une qualité relative de focalisation cible ($Q_{cible}$),
   - une émission d'une requête de modification à destination de l'entité communicante d'origine comportant l'estimation de l'écart.

5. Procédé selon l'une quelconque des revendications 1 à 2, dans lequel l'étape de demande de modification comporte :

   - une estimation d'une distance (L(n)) entre l'antenne destinataire à l'instant courant et une position ($P_{cible}$) correspondant à une qualité relative de focalisation cible ($Q_{cible}$),
   - une sélection d'une valeur pour au moins un paramètre, pour l'instant suivant, choisi parmi une fréquence porteuse et un délai de latence,
   - une émission d'une requête à destination de l'entité communicante d'origine, comportant une référence à la valeur de l'au moins un paramètre sélectionné.

6. Procédé selon l'une quelconque des revendications 1 ou 2, dans lequel l'étape de demande de modification comporte :

   - une comparaison entre l'estimation de la qualité relative de focalisation et une qualité relative de focalisation cible ($Q_{cible}$)

- une détermination d'un indice de variation $IND_{var}(n)$ en fonction du résultat de la comparaison,
- une émission d'une requête de modification à destination de l'entité communicante d'origine comportant l'indice de variation.

**7.** Procédé selon l'une quelconque des revendications 1 à 6, dans lequel, sur réception de la demande de modification, l'entité communicante d'origine modifie une valeur pour au moins un paramètre, pour l'instant suivant, choisi parmi une fréquence porteuse et un délai de latence

**8.** Dispositif, pour une entité communicante destinataire (EC2), de contrôle dynamique de la focalisation d'un signal pré-égalisé par retournement temporel d'un canal de propagation estimé entre une antenne d'origine ($A_1$) d'une entité communicante d'origine EC1 et une antenne destinataire ($A_2$) de l'entité communicante destinataire (EC2) à un instant courant,
le dit dispositif étant **caractérisé en ce qu'**il comporte

- des moyens (EVAL2) d'évaluation d'une qualité relative (Q(n)) de focalisation du signal pré-égalisé émis par l'antenne d'origine et reçu par l'antenne destinataire, par rapport à une qualité à un point focal (FO),
- des moyens(EMET2) de demande de modification de focalisation à destination de l'entité communicante d'origine pour un instant suivant.

**9.** Dispositif, pour une entité communicante d'origine (EC1), de contrôle dynamique de la focalisation d'un signal pré-égalisé par retournement temporel d'un canal de propagation estimé entre une antenne d'origine ($A_1$) d'une entité communicante d'origine (EC1) et une antenne destinataire ($A_2$) de l'entité communicante destinataire (EC2) à un instant courant,
le dit dispositif étant **caractérisé en ce qu'**il comporte

- des moyens (REC1) de réception d'une demande de modification de focalisation émise par l'entité communicante destinataire,
- des moyens (SEL1) de modification d'une valeur pour au moins un paramètre choisi parmi une fréquence porteuse et un délai de latence.

**10.** Entité communicante d'un système de communication radio comportant au moins un des dispositifs selon la revendication 8 ou 9.

**11.** Système de communication radio comportant au moins une entité communicante selon la revendication 10.

**12.** Programme d'ordinateur pour une entité communicante destinataire comprenant les instructions logicielles pour commander la mise en oeuvre par ladite entité de celles des étapes du procédé selon l'une quelconque des revendications 1 à 7 lorsque le programme est exécuté par l'entité communicante destinataire.

**13.** Programme d'ordinateur pour une entité communicante d'origine comprenant les instructions logicielles pour commander la mise en oeuvre par ladite entité de celles des étapes du procédé selon l'une quelconque des revendications 1 à 7 lorsque le programme est exécuté par l'entité communicante d'origine.

**Claims**

**1.** Method for dynamically controlling the focus of a signal pre-equalized by time reversal of an estimated propagation channel between a source antenna ($A_1$) of a source communicating entity (EC1) and a destination antenna ($A_2$) of a destination communicating entity (EC2) at a current instant,
said method being **characterized in that** it comprises steps for :

- evaluation by the destination communicating entity of a relative focus quality (Q(n)) of the pre-equalized signal sent by the source antenna and received by the destination antenna, compared to a quality at a focal point (FO), and if the evaluated relative focus quality does not satisfy a predetermined criterion,
- request, by the destination communicating entity, to modify the focus addressed to the source communicating entity for a subsequent instant.

**2.** Method according to Claim 1, in which the relative focus quality (Q(n)) is determined from a normalized representation (QUAL1, QUAL2) of a received power curve, as a function of a distance between the destination antenna and the focal point, said representation being a decreasing function of the distance and having a maximum at the focal point.

3. Method according to any one of Claims 1 or 2, in which the modification request step comprises :

- an estimation of a distance (L(n)) between the destination antenna at the current instant and a position ($P_{target}$) corresponding to a target relative focus quality ($Q_{target}$),
- a transmission of a modification request addressed to the source communicating entity including the estimation of said distance.

4. Method according to any one of Claims 1 or 2, in which the modification request step comprises :

- an estimation of a deviation ($\Delta L(n)$) between the relative focus quality value evaluated at the current instant and a target relative focus quality value ($Q_{target}$),
- a transmission of a modification request addressed to the source communicating entity including the estimation of the deviation.

5. Method according to any one of Claims 1 or 2, in which the modification request step comprises :

- an estimation of a distance (L(n)) between the destination antenna at the current instant and a position ($P_{target}$) corresponding to a target relative focus quality ($Q_{target}$),
- a selection of a value for at least one parameter, for the next instant, chosen from a carrier frequency and a latency delay,
- a transmission of a request addressed to the source communicating entity, including a reference to the value of the at least one selected parameter.

6. Method according to any one of Claims 1 or 2, in which the modification request step comprises :

- a comparison between the estimation of the relative focus quality and a target relative focus quality ($Q_{target}$),
- a determination of a variation index $IND_{var}(n)$ as a function of the result of the comparison,
- a transmission of a modification request addressed to the source communicating entity including the variation index.

7. Method according to any one of Claims 1 to 6, in which, upon receipt of the modification request, the source communicating entity modifies a value for at least one parameter, for the next instant, chosen from a carrier frequency and a latency delay.

8. Device, for a destination communicating entity (EC2), for dynamically controlling the focus of a signal pre-equalized by time reversal of an estimated propagation channel between a source antenna ($A_1$) of a source communicating entity (EC1) and a destination antenna ($A_2$) of the destination communicating entity (EC2) at a current instant, said device being **characterized in that** it comprises

- means (EVAL2) for evaluating a relative focus quality (Q(n)) of the pre-equalized signal transmitted by the source antenna and received by the destination antenna, relative to a quality at a focal point (FO),
- means (EMET2) for requesting a focus modification addressed to the source communicating entity for a subsequent instant.

9. Device, for a source communicating entity (EC1), for dynamically controlling the focus of a signal pre-equalized by time reversal of an estimated propagation channel between a source antenna ($A_1$) of a source communicating entity (EC1) and a destination antenna ($A_2$) of the destination communicating entity (EC2) at a current instant, said device being **characterized in that** it comprises

- means (REC1) for receiving a focus modification request transmitted by the destination communicating entity,
- means (SEL1) for modifying a value for at least one parameter chosen from a carrier frequency and a latency delay.

10. Communicating entity of a radio communication system comprising at least one of the devices according to Claim 8 or 9.

11. Radio communication system comprising at least one communicating entity according to Claim 10.

12. Computer program for a destination communicating entity comprising software instructions for controlling the implementation by said entity of those of the steps of the method according to any one of Claims 1 to 7 when the program is run by the destination communicating entity.

13. Computer program for a source communicating entity comprising software instructions for controlling the implementation by said entity of those of the steps of the method according to any one of Claims 1 to 7 when the program is run by the source communicating entity.

**Patentansprüche**

1. Verfahren zum dynamischen Steuern der Fokussierung zu einem momentanen Zeitpunkt eines durch Zeitumkehrung vorgeglätteten Signals eines geschätzten Ausbreitungskanals zwischen einer Ausgangsantenne ($A_1$) einer Ausgangskommunikationsentität (EC1) und einer Zielantenne ($A_2$) einer Zielkommunikationsentität (EC2), wobei das Verfahren **dadurch gekennzeichnet ist, dass** es die folgenden Schritte umfasst:

   - Bewerten durch die Ziel-Kommunikationsentität einer relativen Fokussierungsqualität (Q(n)) des vorgeglätteten Signals, das von der Ausgangsantenne gesendet und von der Zielantenne empfangen wird, in Bezug auf eine Qualität an einem Brennpunkt (FO), und falls die bewertete relative Fokussierungsqualität ein vorgegebenes Kriterium nicht erfüllt
   - Anfordern von der Zielkommunikationsentität einer Modifikation der Fokussierung bei der Ausgangskommunikationsentität für einen folgenden Zeitpunkt.

2. Verfahren nach Anspruch 1, wobei die relative Fokussierungsqualität (Q(n)) anhand einer normierten Darstellung (QUAL1, QUAL2) einer empfangenen Leistungskurve als Funktion eines Abstands zwischen der Zielantenne und dem Brennpunkt bestimmt wird, wobei die Darstellung eine abnehmende Funktion des Abstands ist und am Brennpunkt ein Maximum besitzt.

3. Verfahren nach einem der Ansprüche 1 bis 2, wobei der Modifikationsanforderungsschritt Folgendes umfasst:

   - Schätzen eines Abstands (L(n)) zwischen der Zielantenne zu dem momentanen Zeitpunkt und einer Position ($P_{cible}$), die einer relativen Ziel-Fokussierungsqualität ($Q_{cible}$) entspricht,
   - Aussenden einer Modifikationsanforderung zu der Ausgangskommunikationsentität, die die Schätzung des Abstands enthält.

4. Verfahren nach einem der Ansprüche 1 bis 2, wobei der Modifikationsanforderungsschritt Folgendes umfasst:

   - Schätzen eines Abstands ($\Delta L(n)$) zwischen dem Wert der zu dem momentanen Zeitpunkt bewerteten relativen Fokussierungsqualität und einem Wert einer relativen Ziel-Fokussierungsqualität ($Q_{cible}$),
   - Aussenden einer Modifikationsanforderung zu der Ausgangskommunikationsentität, die die Schätzung des Abstands enthält.

5. Verfahren nach einem der Ansprüche 1 bis 2, wobei der Modifikationsanforderungsschritt Folgendes umfasst:

   - Schätzen eines Abstands (L(n)) zwischen der Zielantenne zu dem momentanen Zeitpunkt und einer Position ($P_{cible}$), die einer relativen Ziel-Fokussierungsqualität ($Q_{cible}$) entspricht,
   - Auswählen eines Werts für wenigstens einen Parameter für den folgenden Zeitpunkt, der aus einer Trägerfrequenz und einer Latenzverzögerung gewählt ist,
   - Aussenden einer Anforderung zu der Ausgangskommunikationsentität, die eine Bezugnahme auf den Wert des wenigstens einen gewählten Parameters enthält.

6. Verfahren nach einem der Ansprüche 1 oder 2, wobei der Modifikationsanforderungsschritt Folgendes umfasst:

   - Vergleichen zwischen der Schätzung der relativen Fokussierungsqualität und einer relativen Ziel-Fokussierungsqualität ($Q_{cible}$),
   - Bestimmen eines Variationsindexes $IND_{var}(n)$ als Funktion des Vergleichsergebnisses,

- Aussenden einer Modifikationsanforderung zu der Ausgangskommunikationsentität, die den Variationsindex enthält.

7. Verfahren nach einem der Ansprüche 1 bis 6, wobei bei Empfang der Modifikationsanforderung die Ausgangskommunikationsentität einen Wert für wenigstens einen Parameter für den folgenden Zeitpunkt, der aus einer Trägerfrequenz und einer Latenzverzögerung gewählt ist, modifiziert.

8. Vorrichtung für eine Zielkommunikationsentität (EC2) für die dynamische Steuerung der Fokussierung zu einem momentanen Zeitpunkt eines durch Zeitumkehr vorgeglätteten Signals eines geschätzten Ausbreitungskanals zwischen einer Ausgangsantenne ($A_1$) einer Ausgangskommunikationsentität (EC1) und einer Zielantenne ($A_2$) der Zielkommunikationsentität (EC2),
wobei die Vorrichtung **dadurch gekennzeichnet ist, dass** sie Folgendes umfasst:

   - Mittel (EVAL2) zum Bewerten einer relativen Qualität (Q(n)) der Fokussierung des vorgeglätteten Signals, das von der Ausgangsantenne gesendet und von der Zielantenne empfangen wird, in Bezug auf eine Qualität an einem Brennpunkt (FO),
   - Mittel (EMET2) zum Anfordern der Modifikation der Fokussierung bei der Ausgangskommunikationseinheit zu einem folgenden Zeitpunkt.

9. Vorrichtung für eine Ausgangskommunikationsentität (EC1) für die dynamische Steuerung der Fokussierung zu einem momentanen Zeitpunkt eines durch Zeitumkehr vorgeglätteten Signals eines geschätzten Ausbreitungskanals zwischen einer Ausgangsantenne ($A_1$) einer Ausgangskommunikationsentität (EC1) und einer Zielantenne ($A_2$) der Zielkommunikationsentität (EC2),
wobei die Vorrichtung **dadurch gekennzeichnet ist, dass** sie Folgendes umfasst:

   - Mittel (REC1) zum Empfangen einer Anforderung zum Modifizieren der Fokussierung, die von der Zielkommunikationsentität gesendet wird,
   - Mittel (SEL1) zum Modifizieren eines Wertes für wenigstens einen Parameter, der aus einer Trägerfrequenz und einer Latenzverzögerung gewählt wird.

10. Kommunikationsentität für ein Funkkommunikationssystem, die wenigstens eine der Vorrichtungen nach Anspruch 8 oder 9 umfasst.

11. Funkkommunikationssystem, das wenigstens eine Kommunikationsentität nach Anspruch 10 umfasst.

12. Computerprogramm für eine Zielkommunikationsentität, das Software-Befehle umfasst, um durch diese Entität die Schritte des Verfahrens nach einem der Ansprüche 1 bis 7 auszuführen, wenn das Programm von der Zielkommunikationsentität ausgeführt wird.

13. Computerprogramm für eine Ausgangskommunikationsentität, das Software-Befehle umfasst, um durch diese Entität die Schritte des Verfahrens nach einem der Ansprüche 1 bis 7 auszuführen, wenn das Programm durch die Ausgangskommunikationsentität ausgeführt wird.

## Figure 1

## Figure 2

## Figure 3

## Figure 4

INIT — $n \rightarrow 1$

IT — $n \rightarrow n+1$

E1-1 — $h_{rt,n}(t)$

E1-2 — $s_n(t): A_1 \rightarrow A_2$

E1-3 — $Q(n)$

E1-4 — ◇

E1-5 — $L(n)$

E1-6 — $\Delta L(n)$

E1-7 — $\Delta L(n): EC2 \rightarrow EC1$

E1-8 — $EC1: \Delta L(n)$

E1-9 — $f_p(n+1), D_L(n+1)$

E1-10 — $f_p(n) \rightarrow f_p(n+1)$
$D_L(n) \rightarrow D_L(n+1)$

## Figure 5

INIT — $n \rightarrow 1$

IT — $n \rightarrow n+1$

E2-1 — $h_{rt,n}(t)$

E2-2 — $s_n(t): A_1 \rightarrow A_2$

E2-3 — $Q(n)$

E2-4 — ◇

E2-5 — $\Delta Q(n)$

E2-6 — $\Delta Q(n): EC2 \rightarrow EC1$

E2-7 — $EC1: \Delta Q(n)$

E2-8 — $\Delta L(n)$

E2-9 — $f_p(n+1), D_L(n+1)$

E2-10 — $f_p(n) \rightarrow f_p(n+1)$
$D_L(n) \rightarrow D_L(n+1)$

## Figure 6

INIT ~ $n \rightarrow 1$          IT
          $n \rightarrow n+1$

E3-1 ~ $h_{rt,n}(t)$

E3-2 ~ $s_n(t): A_1 \rightarrow A_2$

E3-3 ~ $Q(n)$

E3-4 ~ ◇

E3-5 ~ $L(n)$

E3-6 ~ $\Delta L(n)$

E3-7 ~ $f_p(n+1), D_L(n+1)$

E3-8 ~ $EC2 \rightarrow EC1$
       $f_p(n+1), D_L(n+1)$

E3-9 ~ $f_p(n+1), D_L(n+1)$

E3-10 ~ $f_p(n) \rightarrow f_p(n+1)$
        $D_L(n) \rightarrow D_L(n+1)$

## Figure 7

INIT ~ $n \rightarrow 1$          IT
          $n \rightarrow n+1$

E4-1 ~ $h_{rt,n}(t)$

E4-2 ~ $s_n(t): A_1 \rightarrow A_2$

E4-3 ~ $Q(n)$

E4-4 ~ ◇

E4-5 ~ $IND_{var}(n)$

E4-6 ~ $IND_{var}(n): EC2 \rightarrow EC1$

E4-7 ~ $IND_{var}(n)$

E4-8 ~ $f_p(n+1), D_L(n+1)$

E4-9 ~ $f_p(n) \rightarrow f_p(n+1)$
       $D_L(n) \rightarrow D_L(n+1)$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. KHALEGHI ; G. EL KLEIN.** *Loughborough Antennas and Propagation Conference,* 2007, 97-100